# EUROPEAN PATENT SPECIFICATION

(11) **EP 0 417 820 B1**
(45) Date of publication and mention of the grant of the patent: **21.06.1995**
(21) Application number: 90202043.7
(22) Date of filing: 26.07.1990
(51) Int. Cl.: B62D 31/02, B60K 6/00

(54) **A vehicle for urban passenger transport**
Fahrzeug für städtische Personenbeförderung
Véhicule pour transport urbain de passagers

(30) Priority: 11.08.1989 IT 2150289
(43) Date of publication of application: 20.03.1991
(73) Proprietor: Doniselli Quattrini, Andrea Carlo, Milano (IT)
(72) Inventor: Doniselli Quattrini, Andrea Carlo, Milano (IT)
(74) Representative: Raimondi, Alfredo, Dott. Ing. Prof.

(56) References cited:
- WO-A-83/00205
- DE-A- 2 823 519
- DE-A- 3 246 182
- DE-U- 7 711 664
- DE-U- 8 807 208
- US-A- 2 543 811
- US-A- 3 365 986
- US-A- 4 246 978
- US-A- 4 502 558

## Description

The present invention relates to an urban public transport vehicle characterized in that it has the floor of the entire passenger compartment at a reduced height above the ground and almost free of discontinuities and restrictions on its free surface.

These characteristics, as is known, are of great importance for public urban mass transport vehicles, since they facilitate boarding and alighting by the users, with considerable advantages both for the users, in particular those who are elderly or have limited mobility, and for the speed of the service (thus providing an additional advantage for the users), the average speed being greatly affected by the duration of stops.

Examples of such vehicles known in the art are described into EP-395586, EP-244549, EP-220783 and WO-86/06688 that show vehicles having only one wheel axis located at a end of the bus, the second axis being located within the trampling floors of the passengers compartment that results reduced.

According to the configuration of the prior art such vehicles only have two steering wheels.

Since the considerable height of the floor is due to the sizes of the various mechanical assemblies (engine, transmission, suspension, etc.), it is evidently appropriate to produce vehicles whose general layout is such that it does not suffer from the above limitations.

This result is achieved by the present invention, which specifies a vehicle for urban passenger transport comprising a central passenger compartment to each opposite end of which a technical compartment is located, the steering and suspension means and the pairs of wheels of the vehicle being located within the volume of said technical compartments, at least one prime mover and the relative transmission being located within at least one of said technical compartments, and by the fact that the pairs of wheel of said technical compartments are steering, said combination allowing to obtain the whole floor surface and the corresponding volume of the passenger compartment free of discontinuities with floor at a reduced height from the ground.

According to a preferred embodiment of the vehicle said prime mover is an electric motor continuously powered by a trolley line or by storage batteries, and in that the transmission means between electric motor and the wheels are mechanical, furthermore said electric motor has its axis perpendicular to the axis of the wheels, and the mechanical transmission has a gear assembly with conical toothed wheels.

It is also provided that said transmission means are a hydrostatic transmission comprising at least one pump driven by an electric motor put into operation only during stops of the vehicle during which electric energy is supplied by contact of a movable pole provided on the vehicle with a suitable fixed cross member with conducting elements and located at vehicle stops, at least one hydraulic accumulator, whose energy is used from one stop to the next, and at least one hydrostatic motor mechanically connected to a pair of wheels, at least one of the hydraulic motor (11) or hydraulic pump being of variable cylinder capacity type.

Further details may be obtained from the following illustrative description, which refers to the case of a vehicle with four driving and steering wheels and hydrostatic transmission, and which is illustrated in the attached drawings which show the following:
in Figure 1, a side view of an example of a vehicle according to the invention;
in Figure 2, a plan view of the vehicle shorn in Fig. 1, in a section along the plane II-II of Fig. 1;
in Figure 3, a logical diagram of the hydraulic traction circuit and of the hydrostatic transmission control system provided in the vehicle, shown here by way of a example illustrating the invention.

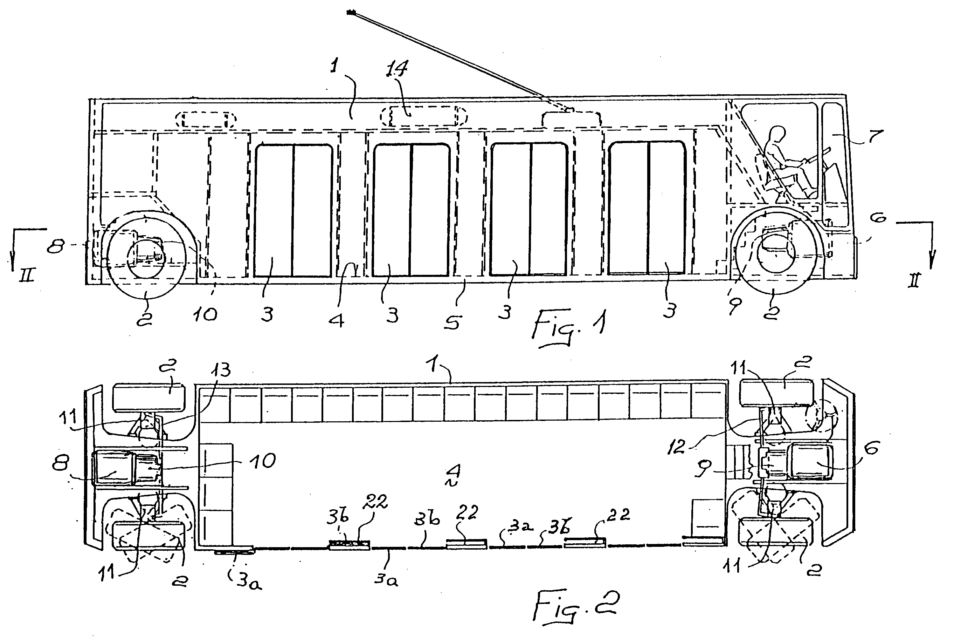

As shown in Figures 1 and 2, the example of the vehicle according to the invention, suitable for urban public mass transport on roads, also called a "trolley-bus", comprises a body 1, with a supporting structure integral with the body, and having four wheels 2 located near the ends of the vehicle.

The part of the body 1 used as the passenger compartment is provided with access doors 3 to the floor 4 of the vehicle, the height of the floor above the ground being dictated solely by the minimum permissible clearance (at stops, this may be further reduced if necessary with respect to the running height, as is known, by action on the pneumatic or hydraulic suspension members) and by the thickness of the lower platform 5 of the vehicle.

The space between the wheels on any one axle and above their suspension, transmission, steering, and similar units is not accessible to the public; in the example shown here, relating to a large trolley-bus, these spaces contain, at the front, a motor 6 and the driver's compartment 7 above it, while at the rear there is installed a second motor 8 and above it the electrical drive assemblies and any other auxiliary assemblies.

In the example cited, the motors 6 and 8 are also connected respectively to pumps 9 and 10 of a hydrostatic transmission, these pumps supplying the front and rear hydraulic motors 11 coupled to the wheels 2.

As shown in Figure 2, all four wheels may conveniently be steering, thus facilitating manoeuvring (in view of the long wheelbase) and limiting the area occupied in turning, thus permitting, in particular, compliance with the regulations: the ratios between the steering angles of the steering assemblies 12 and 13 are chosen accordingly. The steering system may conveniently be hydrostatically operated with double circuits in order to provide conditions of complete safety as a result of this redundancy.

For simplicity in the graphic representation, Figure 2 shows the maximum projection of the front and rear wheels when steering from one side of the vehicle only.

The functional connection between the traction motors and the wheels driven by them is provided, in the example illustrated, by the pumps 9 and 10 and the hydrostatic motors 11; these hydrostatic motors 11 and the pumps 9 and 10 may preferably be of variable cylinder capacity, to enable suitable transmission ratios to be obtained by varying the cylinder capacity.

The hydraulic circuit for coupling the pumps to the motors comprises a distributor assembly and a system of electromagnetic valves which make the relative variations in cylinder capacity of the pumps and hydrostatic motors in accordance with the varying operating conditions.

The hydraulic circuit contains one or more accumulators 14 to which the pumps 9 and 10 may send fluid under pressure, this fluid being subsequently supplied to the hydrostatic motors 11, either alone or in parallel with that supplied from the pumps 9 ad 10. During braking, the distributor assembly supplies, through the hydrostatic motors 11 which in this case act as pumps, one or more accumulators 14, to which is admitted fluid under pressure which is subsequently supplied to the motors 11, for example in the acceleration phase, alone or in parallel with the supply provided by the pumps 9 and 10, thus providing a saving in energy.

The motors of the hydrostatic type may conveniently, but not exclusively, be arranged so that they are integrally attached to the hub and support assemblies forming the wheel supports, and may be coupled in rotation to the wheels through a gear assembly (coaxial epicyclic, or with parallel axes, or with converging axes, or with axes in different planes, or a combination of these, all these being known types), thus eliminating the need for additional transmission units.

For some applications, however, it may be convenient for the hydrostatic motors to be arranged so that they are fixed to the structure of the vehicle, with a mechanical transmission of a known type, with shafts, joints, and also, in the case of a hydrostatic motor for two wheels, a differential transmission assembly, coupling the said motor or motors to the wheels, and consequently this is provided for by the present invention.

In other cases, it may be suitable to have mechanical transmission, with the interposition of gear assemblies of various known types mentioned above between the traction motors (which may be electric or of other types, integral with the wheel supports or supported by the structure) and the wheels, in other words without the interposition of the hydrostatic transmission system, and consequently this is provided for by the present invention.

In all cases, the front and rear axles of the vehicle according to the invention may conveniently, but not exclusively, comprise mechanical assemblies which are virtually identical or substantially similar: this enables many of the components and mechanical assemblies to be standardized, and this modular system may significantly reduce costs (of investment and operation) by considerably simplifying construction and maintenance and reducing the stocks of spare parts.

As stated previously, all the wheels should preferably be driving wheels; however, in particular cases, for example in the case of small vehicles or vehicles with more than two axles, it is possible for only the wheels of one or more axles to be driving wheels.

As is known, the use of one hydrostatic motor for each wheel or in any case the transmission of the motive power to all the wheels enables the best conditions of mobility to be obtained in the case of decreased adhesion, for example in the presence of snow, ice, and similar, and with two (or more) separate motors it is also possible to continue operation in practically any case of failure or in conditions of degraded operation (limp-home).

The use of two (or more, in the case of vehicles with more than two axles) traction motors, subdividing the total power, permits the installation of motors of small dimensions, produced on a larger scale, with higher reliability and signficantly lower costs, and may also offer advantages from the point of view of the general design of the vehicle, by simplifying the problem of the optimal distribution of the load on the axles.

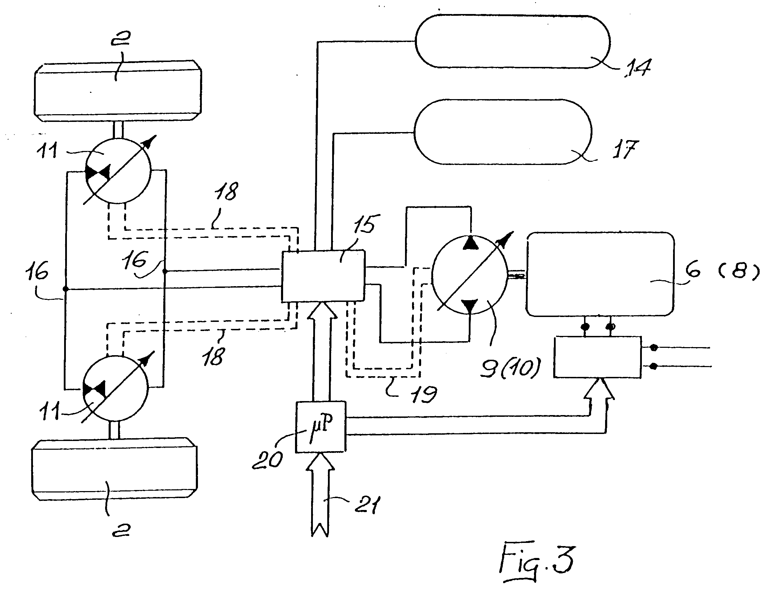

By way of example, the hydrostatic transmission is shown in the form of a logical diagram in Figure 3 for a single motor and a single axle. In this diagram, there is a motor 6 (or 8) which drives a pump 9 (or 10), of the variable cylinder capacity type; this pump supplies the fluid under pressure through a distributor assembly 15 and the lines 16 to the hydraulic motors 11 of an axle, coupled to the wheels 2.

The distributor assembly 15 is also connected to a low-pressure reservoir 17 and to one or more high-pressure hydraulic fluid accumulators 14, and the actuators varying the cylinder capacity of the hydraulic motors 11 and the pumps 9 and 10 are supplied through the distributor assembly by lines 18 and 19 respectively.

The distributor assembly 15 is controlled by a microprocessor data-processing unit 20, which enables the operating variables of the hydrostatic motor and pump to be monitored in all conditions and adapts the respective cylinder capacities, the high-pressure accumulator supply and the load applied to the motor to provide optimal control of the motor power, supplied in accordance with the command 21 sent to the microprocessor unit by the driver of the vehicle.

In particular, it is also possible to supply hydraulic fluid to the hydrostatic motors through the microprocessor unit not only from the pump or from the accumulators separately, but also jointly, in other words in parallel from the pump and from the accumulators, thus providing higher levels of torque to the wheels when necessary. This arrangement permits the installation of motors and pumps whose power is less than the maximum power specified according to the use of the vehicle, since the fluid under pressure from the accumulators may meet, at least partially, the power requirements which may be present in certain conditions, for example in acceleration.

By means of this control system it is also possible to reverse the operation of the hydrostatic motors at the command of the driver of the vehicle, in which case the motors operate as pumps to provide regenerative braking.

The location of the axles, according to the invention, as near as possible to the ends permits the provision of a virtually clear intermediate space, and consequently a passenger compartment which is convenient to use, the more so because of the absence of large compartments for the access steps which may be eliminated or at least reduced in number and height. The carrying capacity is at least equal to, and potentially greater than, that of comparable vehicles of conventional design, in other words with their mechanical assemblies located at least partially under the floor.

The vehicle design considered here offers, in addition to the ease of boarding and alighting for all independently mobile passengers, the possibility of the use of the means of mass transport by handicapped persons also, since it is possible to install much simpler and safer devices for lifting and lowering wheelchairs.

In order to permit the better use of the internal space, and at the same time to provide improved safety and comfort for the passengers, and to reduce the time taken for the boarding and alighting of passengers, the number and sizes of passages must be as great as possible: it is therefore considered convenient, but not exclusively necessary, to have the arrangement of the doors 3 each divided into two leaves, of which one, shown in Figure 2 by the number 3a, slides longitudinally outside the side of the body and the other, 3b, slides longitudinally within a suitable compartment 22 provided in the side wall. In this way it is possible, where necessary, to provide, in the free space of the side of a two-axle vehicle, four equal double doors which open widely and make it even easier for the passengers to board and alight, these operations already being facilitated by the decreased height of the floor above the ground.

## Claims

1. A vehicle for urban passenger transport comprising a central passenger compartment to each opposite end of which a technical compartment is located, the steering (12, 13) and suspension means and the pairs of wheels (2) of the vehicle being located within the volume of said technical compartments, at least one prime mover (6, 11) and the relative transmission being located within at least one of said technical compartments, and by the fact that the pairs of wheel (2) of said technical compartments are steering, said combination allowing to obtain the whole floor (4) surface and the corresponding volume of the passenger compartment free of discontinuities with floor (4) at a reduced height from the ground.

2. Vehicle for urban passenger transport according to claim 1, characterized in that said prime mover (6) is an electric motor continuously powered by a trolley line or by storage batteries, and in that the transmission means between electric motor and the wheels (2) are mechanical.

3. Vehicle for urban passenger transport according to claims 1 and 2, characterized in that said electric motor (6, 8) has its axis perpendicular to the axis of the wheels (2), and the mechanical transmission has a gear assembly with conical toothed wheels.

4. Vehicle for urban passenger transport according to claim 1 characterized in that one prime mover is provided for each wheel.

5. Vehicle for urban passenger transport according to claim 1, characterized in that said transmission means are a hydrostatic transmission comprising at least one pump (9, 10) driven by an electric motor put into operation only during stops of the vehicle during which electric energy is supplied by contact of a movable pole provided on the vehicle with a suitable fixed cross member with conducting elements and located at vehicle stops, at least one hydraulic accumulator (14), whose energy is used from one stop to the next, and at least one hydrostatic motor (11) mechanically connected to a pair of wheels (2), at least one of the hydraulic motor (11) or hydraulic pump (9, 10) being of variable cylinder capacity type.

## Patentansprüche

1. Fahrzeug für die Personenbeförderung in Städten, mit einem zentralen Fahrgastabteil, an dessen beiden sich gegenüberliegenden Enden ein Technikabteil angebracht ist, wobei die Steuer- (12, 13) und Aufhängungsmittel und die Räderpaare (2) des Fahrzeugs innerhalb des Raums der Technikabteile vorgesehen sind, wobei mindestens eine Antriebsvorrichtung (6, 11) und die entsprechende Transmissionsvorrichtung in mindestens einem der Technikabteile vorgesehen sind, und mit der Tatsache, daß die Räderpaare (2) der Technikabteile Steuerräder sind, wobei es diese Kombination erlaubt daß die gesamte Fußbodenfläche (4) und der entsprechende Raum des Fahrgastabteils frei von Unstetigkeiten zum Fußboden (4) bei einer verringerten Höhe vom Erdboden sind.

2. Fahrzeug für die Personenbeförderung in Städten nach Anspruch 1, **dadurch gekennzeichnet,** daß die Antriebsvorrichtung (6) ein elektrischer Motor ist, der über eine Oberleitung oder durch Speicherbatterien mit Strom versorgt wird, und daß die Transmissionsmittel zwischen dem elektrischen Motor und den Rädern (2) mechanisch sind.

3. Fahrzeug für die Personenbeförderung in Städten nach den Ansprüchen 1 und 2, **dadurch gekennzeichnet,** daß die Achse des elektrischen Motors (6, 8) senkrecht zu der Achse der Räder (2) ist und daß die mechanische Transmission ein Getriebe mit konischen gezahnten Rädern aufweist.

4. Fahrzeug für die Personenbeförderung in Städten nach Anspruch 1, **dadurch gekennzeichnet,** daß jeweils eine Antriebsvorrichtung für jedes Rad vorgesehen ist.

5. Fahrzeug für die Personenbeförderung in Städten nach Anspruch 1, **dadurch gekennzeichnet,** daß die Transmissionsvorrichtung ein Hydrogetriebe ist, mit wenigstens einer Pumpe (9, 10), die durch einen elektrischen Motor angetrieben wird, der nur während des Halts des Fahrzeugs in Betrieb genommen wird, während dem elektrische Energie durch den Kontakt eines beweglichen Leitungsarms zugeführt, wird, der mit einem geeigneten befestigten Querglied an dem Fahrzeug angebracht ist und leitende Elemente aufweist, die an den Fahrzeuganschlägen vorgesehen sind, mit wenigstens einem Hydrospeicher (14), dessen Energie von einem Stop zum nächsten Stop benutzt wird, und wenigstens einem hydrostatischen Motor (11), der mechanisch mit einem Paar Rädern (2) verbunden ist, wobei wenigstens einer der hydrostatischen Motoren (11) oder die hydraulische Pumpe (9, 10) eine variable Zylinderkapazität aufweist.

## Revendications

1. Un véhicule de transport urbain pour passagers, comprenant un compartiment central de passagers à chaque extrémité opposée duquel est placé un compartiment technique, les moyens de direction (12, 13) et les moyens de suspension ainsi que les paires de roues (2) du véhicule étant placés à l'intérieur du volume desdits compartiments techniques, au moins un moteur principal (6, 11) et la transmission correspondante étant placés à l'intérieur d'au moins un desdits compartiments techniques, et par le fait que les paires de roues (2) desdits compartiments techniques sont directrices, ladite combinaison permettant d'obtenir que l'ensemble de la surface du plancher (4) et le volume correspondant du compartiment passager ne présentent pas de discontinuité avec le plancher (4) au niveau d'une hauteur réduite par rapport au sol.

2. Véhicule de transport urbain pour passagers selon la revendication 1, caractérisé en ce que ledit moteur principal (6) est un moteur électrique alimenté de manière continue en courant électrique par une ligne à trolley ou par une batterie d'accumulateurs, et en ce que les moyens de transmission entre le moteur électrique et les roues (2) sont mécaniques.

3. Véhicule de transport urbain pour passagers selon les revendications 1 et 2, caractérisé en ce que ledit moteur électrique (6, 8) présente son axe perpendiculaire à l'axe des roues (2), et en ce que la transmission mécanique présente un train d'engrenages à roues dentées coniques.

4. Véhicule de transport urbain pour passagers selon la revendication 1, caractérisé en ce qu'un moteur principal est prévu pour chaque roue.

5. Véhicule de transport urbain pour passagers selon la revendication 1, caractérisé en ce que lesdits moyens de transmission sont constitués par une transmission hydrostatique comprenant au moins une pompe (9, 10) entrainée par un moteur électrique mis en fonctionnement seulement pendant les arrêts du véhicule au cours desquels l'énergie électrique est fournie par contact d'une perche mobile prévue sur le véhicule avec une traverse fixe appropriée présentant des éléments conducteurs et placés aux arrêts du véhicule, au moins un accumulateur hydraulique (14) dont l'énergie est utilisée d'un arrêt au suivant , et au moins un moteur hydrostatique (11) relié de manière mécanique à une paire de roues (2), au moins un parmi le moteur électrique (11) et la pompe hydraulique (9, 10) étant du type à cylindrée variable.
